(19)

Europäisches
Patentamt
European
Patent Office
Office européen
des brevets

(11) **EP 1 775 012 A2**

(12) **EUROPEAN PATENT APPLICATION**

(43) Date of publication:
**18.04.2007 Bulletin 2007/16**

(51) Int Cl.:
**B01D 53/70** (2006.01)   **B01D 53/68** (2006.01)
**B01D 53/86** (2006.01)

(21) Application number: **06014586.9**

(22) Date of filing: **23.11.2000**

(84) Designated Contracting States:
**DE FR NL**

(30) Priority: **26.11.1999   JP 33546899**

(62) Document number(s) of the earlier application(s) in
accordance with Art. 76 EPC:
**00125243.6 / 1 103 297**

(71) Applicant: **HITACHI, LTD.**
**Chiyoda-ku**
**Tokyo 100-8280 (JP)**

(72) Inventors:
  • **Kanno, Shiuchi**
    **Hitachi-shi**
    **Ibaraki 319-1225 (JP)**
  • **Yamashita, Hisao**
    **Hitachi-shi**
    **Ibaraki 316-0011 (JP)**
  • **Miyamoto, Tomohiko**
    **Takahagi-shi**
    **Ibaraki 318-0014 (JP)**

  • **Tamata, Shin**
    **Mito-shi**
    **Ibaraki 310-0015 (JP)**
  • **Shibano, Yoshiki**
    **Hitachi-shi**
    **Ibaraki 316-0026 (JP)**
  • **Komuro, Takeo**
    **Hitachi-shi**
    **Ibaraki 319-1415 (JP)**
  • **Yukitake, Tsugihiro**
    **Naka-gun, Ibaraki 319-1102 (JP)**
  • **Kawasaki, Terufumi**
    **Hitachinaka-shi**
    **Ibaraki 312-0062 (JP)**

(74) Representative: **Beetz & Partner**
**Steinsdorfstrasse 10**
**80538 München (DE)**

Remarks:
This application was filed on 13 - 07 - 2006 as a
divisional application to the application mentioned
under INID code 62.

(54) **Method and apparatus for treating perflourocompound gas**

(57)    The invention relates to a method and an apparatus for treating perfluorocompound (PFC) gas comprising perfluorinated compounds. The apparatus comprises a PFC decomposition apparatus (1) for decomposing PFC gas, a gas washing apparatus (13) for washing the decomposed gas with a washing liquid, mist removal means (21) for removing mist formed in the gas washing apparatus (13) and discharging means (16, 19) for discharging the demisted gas (17) from the mist removal means (21) and for discharging washing liquid as waste liquid (20) from the gas washing apparatus. The mist removal means comprise a cyclone type apparatus (21), a filter type mist separator, an electric dust collector and an active carbon absorption apparatus.

FIG. 1

**Description**

BACKGROUND OF THE INVENTION

The present invention relates to a method and an apparatus for treating perfluorocompound (PFC) gas.

PFC is a general term for $CF_4$, $C_2F_6$, $C_3F_8$, $SF_6$, $NF_3$, and the like. PFC gas is used as etching gas for semiconductors, cleaning gas for semiconductors, insulating gas, and others. The PFC gas is a kind of earth warming-up gas, and its release into the atmosphere is subject to regulations. Therefore, various methods for decomposition of PFC have been investigated. One of the methods, wherein PFC gas is decomposed by hydrolysis, subsequently, the decomposed gas is treated with water or an alkaline aqueous solution, and the treated gas is exhausted into the atmosphere, has been disclosed in JP-A-11-70322 (1999).

During study of the PFC treating method, wherein the PFC gas is decomposed, the decomposed gas is washed, and the washed gas is exhausted, the inventors of the present invention have found that exhaust blowers and exhaust pipes for exhausting the washed gas are corroded by the washed gas.

The present invention is aiming at suppressing the corrosion of exhaust blowers and exhaust pipes by the washed decomposed PFC gas in the method or the apparatus for treating the decomposed PFC gas.

The gist of the present invention is separating mist containing PFC decomposition products contained in the decomposed gas from the gas after washing the gas.

The inventors of the present invention have found that the corrosion of exhaust pipes and exhaust blowers is caused by the decomposed PFC gas which has not been removed by washing in the washing step and released to outside of the washing tower in the form of mist which adheres to the exhaust blowers or the exhaust pipes. Therefore, the inventors have succeeded in suppressing the corrosion of exhaust pipes and exhaust blowers by separating the mist from the washed gas.

A large proportion of the mist contained in the gas after the washing step has a particle size larger than 10 $\mu$m, and mist having a particle size smaller than 1 $\mu$m are amounts to at most several tens percent. In order to remove the mist having such a particle size distribution, the cyclone separators, filter separators, electric dust collectors and active carbon adsorption apparatus of the invention are suitable. In particular, the cyclone separators and the filter separators are desirable, because their apparatus can be made small sized. When a filter separator is used, it is desirable that plural filters having different pore sizes are overlapped, and large size mist is separated by the filter having the larger pore size, and small size mist is separated by the filter having the smaller pore size. If only a filter having a smaller pore size is used, passing the gas through the filter is disturbed, which is not desirable, because the pressure loss at the filter is increased, and use of large size blowers is required. The pressure loss can be made small by combining plural filters having different pore sizes with each other.

The present invention can be applied to methods wherein PFC gas is decomposed by hydrolysis, oxidation decomposition, combustion, or thermal decomposition, and the like to a gas containing hydrogen fluoride, which is washed and exhausted. In addition to the above methods, the present invention can be applied to any method wherein PFC gas is decomposed to a gas containing hydrogen fluoride. The hydrogen fluoride can be removed from the gas by absorbing it into a solution by washing with water or an alkaline aqueous solution such that the gas released from the washing tower substantially does not contain fluorine compounds.

Prior art, wherein mist is separated from exhaust gas after washing the exhaust gas, is disclosed in JP-A-11-216455 (1999), but this prior art does not relate to treating decomposed PFC gas. JP-A-8-318122 (1996) and JP-A-57-197023 disclose methods, wherein an absorption tower is used after water washing of the gas, but this prior art does not relate to treating a corrosive mist of decomposed PFC gas, neither.

US 5 955 037 discloses a method and an apparatus for the treatment of gaseous effluents such as waste gases from semiconductor manufacturing operations. The system comprises a pre-oxidation unit, which may already comprise a scrubber, an oxidation unit such as an electrothermal oxidizer, and a post-oxidation treatment unit, such as a wet or dry scrubber. It is mentioned in the description of this document (column 11, 2nd paragraph) that the constituent treatment units may include an oxidizer which can be, inter alia, a catalytic oxidizer. The system as described and shown in Fig. 10 of this document comprises a demister pad, which may be a demister mesh, provided in the upper part of a wet scrubber column, however, this document does not disclose further details regarding the demister pad structure.

It is the underlying problem of the present invention to provide means for improving the efficiency of mist removal from the gas released from gas washing.

The above problem is solved according to the independent claims. The dependent claims relate to preferred embodiments of the invention.

The method of the invention of treating perfluorocompound (PFC) gas comprising perfluorinated compounds comprises the steps of

(A) decomposing the PFC gas,

(B) washing the resulting gas with a washing liquid of water or an aqueous alkaline solution,
(C) removing mist from the washed gas and
(D) discharging the demisted gas and the washing liquid;

it is characterized in that
in step (C) mist is removed from the washed gas by means of

- a cyclone type apparatus,
- a filter type mist separator comprising plural filters having different pore sizes,
- an electric dust collector or
- an active carbon absorportion apparatus.

According to a preferred embodiment, the method of the invention is characterized in that in step (C) a cyclone type apparatus is used comprising a liquid waste outlet at the bottom portion for discharging separated mist liquid and further comprising a liquid outlet for discharging mist liquid contained in the gas flowing through the inner cylinder of the cyclone type apparatus.

According to another preferred embodiment, the method is characterized in that in step (C) a filter type mist separator is used comprising a liquid outlet for discharging mist liquid.

According to a further preferred embodiment, the method is characterized in that in step (A)

(a) the PFC gas is decomposed by hydrolysis, oxidation decomposition, combustion or thermal decomposition with a PFC decomposition catalyst, and
(b) hazardous components are removed from the resulting gas with a hazardous component removing catalyst.

In accordance with another preferred embodiment, the method is characterized in that in step (A) the PFC gas is diluted with nitrogen and contacted with the PFC decomposition catalyst in the presence of air and water.

The PFC decomposition catalyst used is preferably composed of $Al_2O_3$ and at least one element selected from Ni, Zn, Ti, Fe, Sn, Co, Zr, Ce, Si, Pt and Pd.

The hazardous component removing catalyst used is preferably composed of $Al_2O_3$ and Pd, La.

The apparatus of the invention for treating perfluorocompound (PFC) gas comprising perfluorinated compounds comprises

- a PFC decomposition apparatus for decomposing PFC gas,
- a gas washing apparatus for washing the decomposed gas with a washing liquid of water or an aqueous alkaline solution,
- mist removal means for removing mist formed in the gas washing apparatus, and
- discharging means for discharging demisted gas from the mist removal means and for discharging washing liquid;
it is characterized in that
the mist removal means are
- a cyclone type apparatus,
- a filter type mist separator comprising plural filters having different pore sizes,
- an electric dust collector or
- an active carbon absorption apparatus.

The cyclone type apparatus preferably comprises a liquid waste outlet at the bottom portion for discharging separated mist liquid and further comprises a liquid outlet for discharging mist liquid contained in the gas flowing through the inner cylinder of the cyclone type apparatus.

The filter type mist separator preferably comprises a liquid outlet for discharging mist liquid.

According to a preferred embodiment, the apparatus of the invention is characterized in that the PFC decomposition apparatus comprises

(a) a PFC decomposition catalyst for decomposing the PFC gas by hydrolysis, oxidation decomposition, combustion or thermal decomposition
and
(b) a hazardous component removing catalyst for removing hazardous components from the PFC decomposition gas.

In accordance with a further preferred embodiment, the apparatus of the invention is characterized in that the PFC decomposition apparatus is a tower comprising

- a preheater comprising inlet means for introducing the gas to be treated, air and water, for pre-heating the reaction gas,
- the PFC decomposition catalyst,
- the hazardous component removing catalyst and
- a heater for heating the reaction gas, the PFC decomposition catalyst and the hazardous component removing catalyst.

According to still a further preferred embodiment, the apparatus of the invention is characterized in that the gas washing apparatus is a gas washing tower wherein water and/or an aqueous alkaline solution is sprayed on the gas.

SUMMARY OF THE INVENTION

When $SF_6$ or $NF_3$ is decomposed by hydrolysis, the reactions can be theoretically expressed by the following equations (1) and (2):

$$SF_6 + 3H_2O \rightarrow SO_3 + 6HF \qquad \text{(equation (1))}$$

$$2NF_3 + 3H_2O \rightarrow NO + NO_2 + 6HF \qquad \text{(equation (2))}.$$

The decomposition products such as $SO_3$, HF, NO, $NO_2$, $H_2O$ can be removed from the decomposed gas by washing with water or an alkaline aqueous solution at a washing tower.

However, a part of HF, $SO_3$, $NO_2$, and the like, which has not been removed, forms a mist with water, which passes through the washing tower. For instance, it was found that 1 mole of $SO_3$ is accompanied with approximately 250 moles of water. If the mist is exhausted into the exhaust line, it is condensed at portions where the temperature of the exhaust gas is lowered below the dew point, and it adheres firmly on the inner walls of the exhaust pipes and may cause choking of the pipe. Further, the mist adheres on the inside of exhaust blowers, and the operation of the exhaust blower may become impossible. In a case when $NF_3$ is treated, mist of nitric acid is generated during the washing operation. The mist of nitric acid is flowing into the exhaust pipe and sometimes causes corrosion of the exhaust pipe and others. In a case when carbon group containing PFC gas is treated, the exhaust pipes or the exhaust blower are corroded mainly by HF gas.

The particle size of the mist, which was contained in the exhaust gas passed through the washing tower, was measured using an impactor type particle size detector. As the result, the proportion of a particle size of the mist of 11 $\mu$m or larger was approximately 60 %; the amount of particle sizes of 1 $\mu$m or smaller was approximately 30 %, and the rest was in the range of 1 - 10 $\mu$m.

BRIEF DESCRIPTION OF THE DRAWINGS

FIG. 1 is a schematic illustration indicating an example of the PFC treating apparatus relating to the present invention installed with a semiconductor etching oven,
FIG. 2A is a schematic plan view of a cyclone mist separator, and FIG. 2B is a schematic side cross section of the same,
FIG. 3 is a schematic side cross section of a filter mist separator,
FIG. 4 is a schematic illustration indicating an electric dust collector used for separating mist, and
FIG. 5 is a schematic illustration indicating an active carbon absorption apparatus used for separating mist.

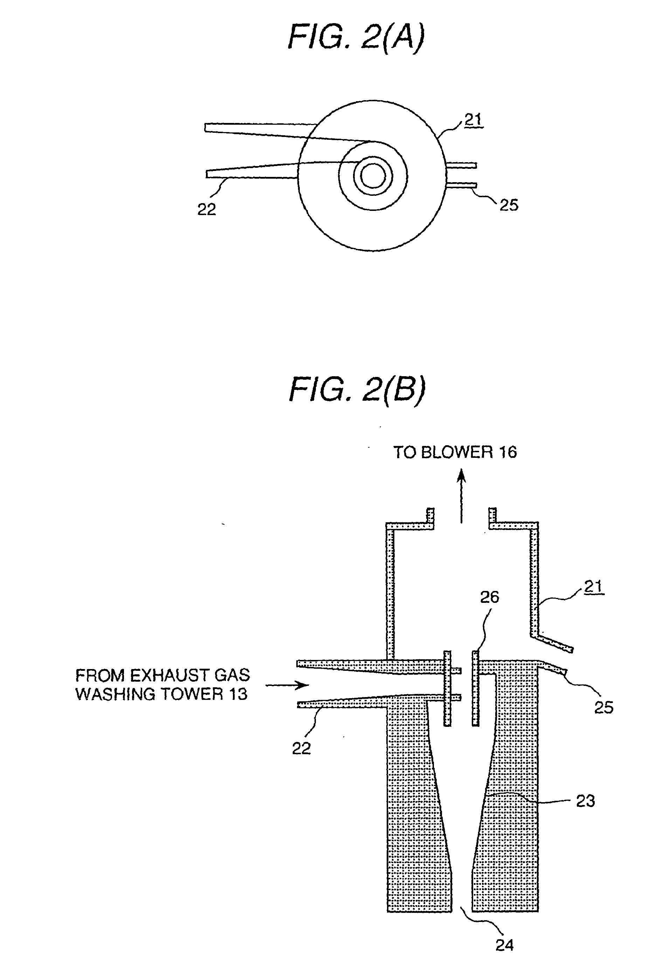

The cyclone type mist separator is an apparatus for removing small solid particles or droplets in gas stream using centrifugal force. Schematic illustrations of the cyclone type separator are shown in FIG. 2(A) and FIG. 2(B). FIG. 2(A) is a plan view, and FIG. 2(B) is a side cross section. In accordance with the cyclone type mist separator 21, the gas containing mist is introduced into the cyclone through the gas inlet 22 with a high speed. The mist introduced into the inside of the cyclone is driven in a direction toward outside by the centrifugal force, and collides with the inner wall 23 of the cylinder. The mist collided with the inner wall 23 is discharged from a liquid waste outlet 24 at the bottom portion of the cyclone. The gas from which mist has been removed flows upwards through the inner cylinder 26, and is released from the upper gas exhaust outlet. The liquid contained in the gas flowing through the inner cylinder 26 is discharged from the liquid outlet 25. The size of the cyclone (the size of the portion at the maximum diameter of the inner wall 23) is desirably decided depending on the diameter of the droplets to be removed. If the inner diameter of the gas inlet 22 is small and the velocity of the gas at the inlet is fast, the centrifugal force becomes large, and small particle size mist can be removed. For instance, in order to remove mist of approximately 1 $\mu$m, the diameter of the gas inlet is desirably made approximately 1 cm, and the gas velocity at the inlet is made approximately 20 m/s. A high mist removal rate can be obtained by setting the conditions in the range as above. Although the mist removal rate is increased as the gas velocity is increased, the pressure loss is also increased. The material of the cyclone is desirably vinyl chloride, acrylate resin, and the like, which are superior in corrosion resistance.

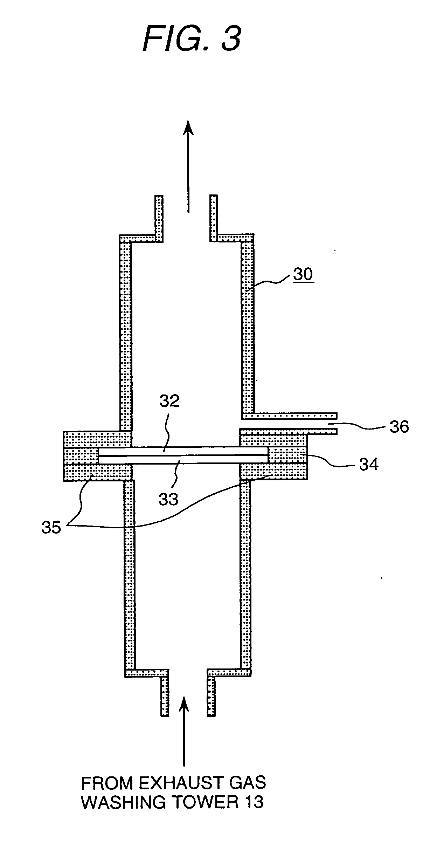

The filter type mist separator catches the mist in the gas flow using a filter having many fine pores. A schematic cross section of the filter type mist separator is shown in FIG. 3. FIG. 3 shows an example, wherein two filters 32, 33 having different pore sizes are overlapped. In accordance with the filter type mist separator 30, the filters 32, 33 are provided at approximately the middle portion in the cylinder, and the gas is introduced into the cylinder from the bottom portion and exhausted from the top portion. The filters 32, 33 are fixed to the cylinder by the flange 35 via the packing 34. The liquid contained in the gas passed through the filter is discharged to outside of the cylinder through the liquid outlet 36.

When the gas velocity at the filter is in the range of 5-25 cm/s, the use of a filter having a pore size smaller than 250 $\mu$m is desirable in order to remove mist of 1 $\mu$m; in particular, the use of a filter having a pore size smaller than 160 $\mu$m is preferable. The removing rate of mist is decreased if the pore size is large, and if the pore size is small, the pressure loss is increased. As regards the material of the filter, commercially available filters made of glass can be used. However, if an acidic gas such as HF is contained in the gas, a filter made of ceramics is desirable. The filter can be provided in an exhaust gas washing tower. For instance, the filter may be provided at the upper side of the spray nozzle in a spray type washing tower, in order to remove the mist contained in the washed gas.

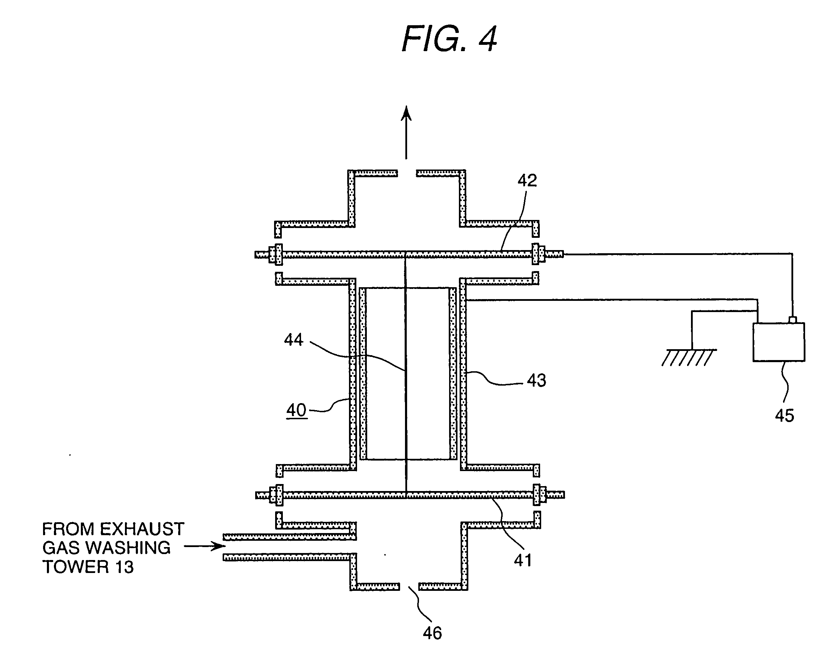

The electric dust collector collects the mist from a gas flowing in a strong electric field by electrostatic charging, and the mist is collected at an opposite electrode portion. A schematic cross section of the electric dust collector is shown in FIG. 4. In accordance with the electric dust collector 40, a discharge electrode 44 is supported by the discharge electrode supporting rods 41, 42, which are arranged at the upper portion and the lower portion of the collector, and a cylindrical dust collecting electrode 43 is provided facing the discharge electrode 44. The discharge electrode 44 and the dust collecting electrode 43 are connected to a high voltage power supply 45. The gas to be treated is introduced from the lower gas inlet, and exhausted from the top portion. The liquid separated from the gas is discharged from the liquid outlet 46. In case of the electric dust collector, it is desirable to charge at a voltage higher than 8 kV. It is desirable to provide a flow of air to the electrode portion, in order to prevent mist from adhering to the electrode. If the mist is adhered to the electrode, the voltage can not be elevated because of shortage of the circuit. As material for the electrodes of the dust collector, tungsten wire, SUS wire, and the like can be used.

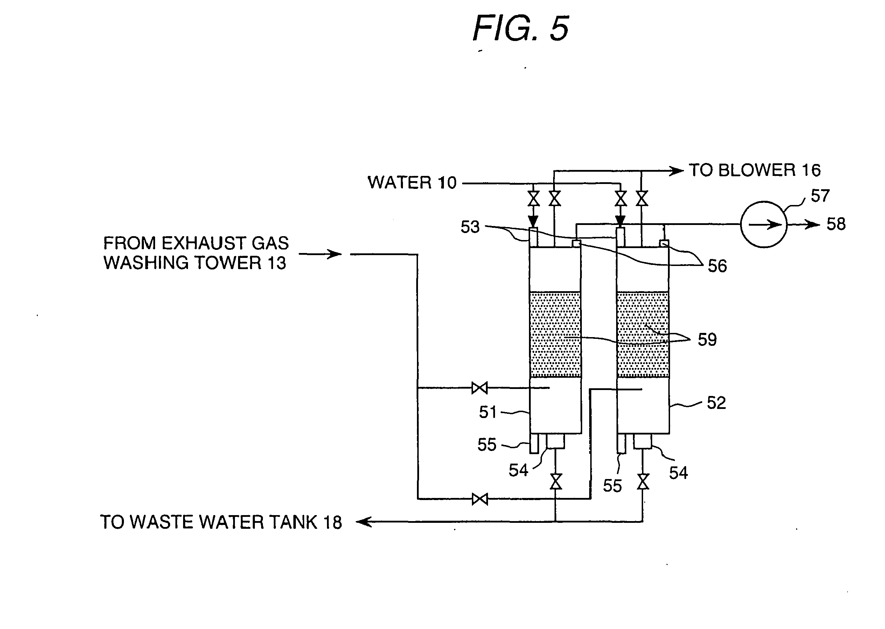

The active carbon absorption apparatus is an apparatus for absorbing the mist by active carbon. A schematic composition of the active carbon absorption apparatus is shown in FIG. 5. The active carbon absorption apparatus of FIG. 5 comprises two towers, absorption/regeneration towers, 51, 52, filled with active carbon 59. When one of them is used in an absorption step, the other is used in a regeneration step. During the absorption step, the gas is introduced into the absorption/regeneration tower from the bottom portion of the active carbon 59, and exhausted from the top portion through the active carbon layer. During the regeneration step, water 10 is supplied into the tower from the inlet 53 to wash away the mist adhered to the active carbon, and the water is discharged to outside of the tower from the liquid outlet 54. Subsequently, in order to dry the active carbon, air is supplied into the tower from the gas inlet 55, and exhausted from the tower 58 from the gas outlet 56 by the exhaust blower 57. The space velocity of the gas in the active carbon layer is desirably in the range of 300 - 400 h$^{-1}$. When the amount of the gas to be treated is 75 1/min, active carbon of 10-15 1 is sufficient. The water flow for regenerating the active carbon can be continuous, or the water can flow only during the regeneration step by storing the water in the tower. When the mist contains $SO_3$ and others, sulfuric acid is adsorbed onto the active carbon. Therefore, the water used for regenerating the active carbon contains sulfuric acid, but because $SO_3$ and others can be absorbed, the water can be recycled to the exhaust gas washing tower. However, if the pH is lowered, $SO_3$ can not be absorbed. Accordingly, control of the pH is required.

When the mist is removed by the mist separating apparatus such as cyclone, filter, and others, control of the flow rate of the gas introduced into the mist separating apparatus is important. When the flow rate of the gas introduced into the mist separating apparatus is decreased by decreasing the amount of the gas introduced into the PFC decomposition apparatus, it is desirable to adjust the flow rate of the gas to a designated flow rate (a set flow rate used when the mist decomposition apparatus is designed) by adding in-leak gas, or to apply other methods. In the case of the active carbon absorption apparatus, adjusting the flow rate is not necessary, because, even if the flow rate is decreased, the contact time is extended, and the mist removal performance is not decreased.

DETAILED DESCRIPTION OF THE PREFERRED EMBODIMENTS

Hereinafter, embodiments of the present invention are explained with reference to the drawings. However, the present invention is not restricted to the following embodiments.

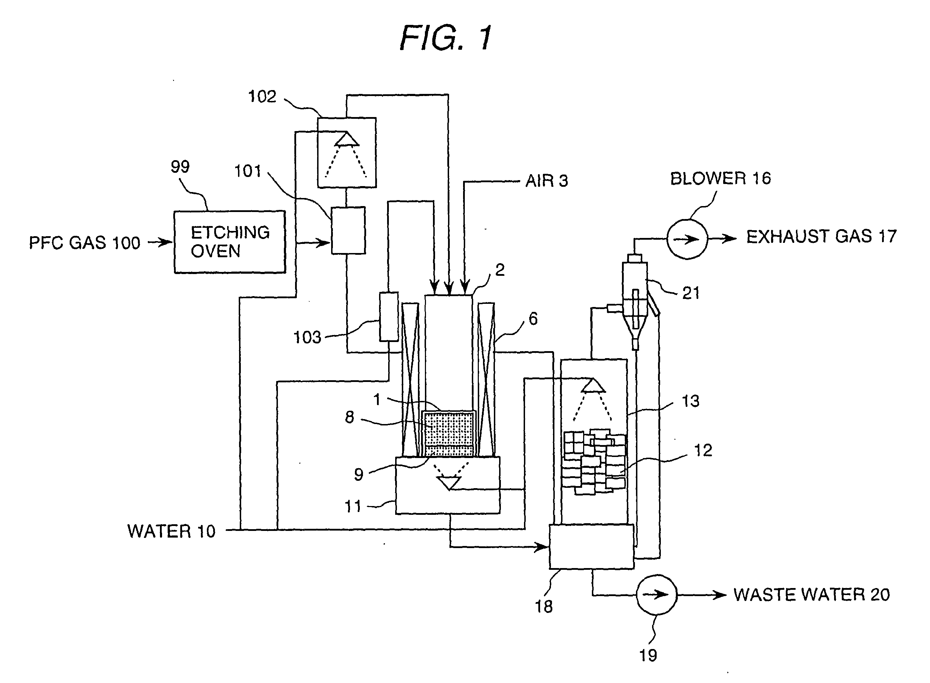

FIG. 1 illustrates an example wherein the PFC removing apparatus of the present invention is installed with a semiconductor etching oven.

In the etching oven 99, etching of semiconductor wafers is performed with PFC gas 100 such as $SF_6$ and others under a reduced pressure. After finishing the etching, PFC gas is exhausted by pumping out the atmosphere in the etching oven by a vacuum pump (not shown in the figure). At that time, $N_2$ gas is introduced into the pump for diluting the concentration of the PFC to several percent, in order to protect the pump from corrosion.

The exhaust gas from the etching oven is introduced into a tower 101 packed with plastic particles and others for removing solid articles, and then, introduced into a spray tower 102 for removing water-soluble components before entering into the PFC decomposition tower 1. The gas flowing through the spray tower 102 is heated to a PFC decomposition temperature at a pre-heater 2. Because the PFC decomposition tower 1 of the present embodiment is of a type to decompose the PFC by hydrolysis, air 3 and water 10 which is passed through an ion exchange resin layer 103 are supplied to the pre-heater 2. The water is vaporized at the pre-heater 2. The concentration of the PFC at the outlet of the pre-heater 2 is desirably in the range of approximately 0.1 - 1 %, and the steam amount is adjusted desirably to be 25 - 100 times the moles of the fluorine compounds. The air 3 is desirably added so that the concentration of the oxygen in the reaction gas becomes approximately 4 %. The above mixed gas, that is, the reaction gas is introduced into the PFC decomposition tower 1 which is installed at the outlet of the pre-heater 2. In accordance with the present embodiment, assuming that the PFC is $SF_6$, or a gas containing $SF_6$, the PFC decomposition catalyst 8 and the hazardous component removing catalyst 9 are packed into the PFC decomposition tower 1. Hazardous component here means CO, $SO_2F_2$, and the like. The mixed gas is contacted with the catalyst under the conditions that the space velocity is 1000 $h^1$, and the reaction temperature is 650 - 850 °C. The space velocity ($h^{-1}$) is a value obtained by the following equation:

$$\text{Flow rate of the reaction gas (ml/h) / amount of}$$
$$\text{catalyst (ml).}$$

In the PFC decomposition tower, the catalyst and the reaction gas are desirably heated by a heater 6 such as an electric heater and the like. The reaction gas exhausted from the PFC decomposition tower 1 is introduced into the cooling chamber 11, and cooled by water 10 sprayed from a spray nozzle. HF and the water soluble components in the gas passed through the cooling chamber are removed by absorbing into water 10 at the exhaust gas washing tower 13. Then, the gas is introduced into the mist removal apparatus. In accordance with the present embodiment, packing material 12 such as an absorbing agent and the like is filled into the exhaust gas washing tower 13, in order to increase the contact efficiency of the gas with water. A cyclone type mist separating apparatus 21 is provided. The gas from which the mist has been removed is released into the atmosphere as an exhaust gas 17 by sucking the gas with the blower 16. The waste water 20 from the exhaust gas washing tower 13 comprising absorbed HF and others is stored in the storage tank 18 once, and released by the waste water pump 19. The waste water 20 can be made harmless by a ready-made waste water treating facility in the semiconductor factory. The mist separated by the cyclone can also be stored in the waste water tank.

As the PFC decomposition catalyst 8, for example, Al containing at least one of element selected from the group consisting of Zn, Ni, Ti, Fe, Sn, Co, Zr, Ce, Si, Pt, and Pd, can be used, but it is not restricted by the above example. These PFC decomposition catalysts can be used in the form of oxide, metal, complex oxide, and others. A catalyst composed of $Al_2O_3$ and at least one of Ni, Zn, and Ti has a high decomposition performance, and is significantly preferable.

As the washing tower 13, any of a spray type which spray water or an alkaline aqueous solution, a bubbling type which introduces the decomposition gas by bubbling into the water or an alkaline aqueous solution, and a catching type which catches the decomposed gas by a washing tower packed with an absorbing agent or an alkaline solid body such as KOH, NaOH, $Ca(OH)_2$, $Mg(OH)_2$, and the like, and others are usable. Among them, the spray type washing tower is the most preferable, because it has a high efficiency, and choking of the gas flow by precipitation of crystals in the washing tower hardly occurs.

Because corrosive gas is flowing in the exhaust gas pipe from the washing tower, the exhaust gas pipe is desirably made of a highly corrosion resistant material such as vinyl chloride, acrylate resin, and the like, or of a material both surfaces of which are coated with the above corrosion resistant material. The material for the exhaust gas blower is similar to that of the exhaust gas pipe.

Embodiment 1

Treatment of $SF_6$ was performed by the PFC treatment apparatus illustrated in FIG. 1 except the etching oven 99, the packed tower 101, and the spray tower 102. The $SF_6$ was diluted by adding nitrogen gas to a concentration of approximately 5000 ppm. The diluted gas was added with air 3, and heated by the pre-heater 2. Deionized water was vaporized by introducing into the pre-heater 2 such that the steam amount was 33 - 37 times the theoretical amount. The reaction gas adjusted above was introduced into the PFC decomposition tower 1, which had been heated by the heater 6, and contacted with a $SF_6$ decomposition catalyst 8 and a $SO_2F_2$ decomposition catalyst 9. As the $SF_6$ decomposition catalyst, a catalyst composed of Ni and $Al_2O_3$ was used, and as the $SO_2F_2$ decomposition catalyst, a catalyst composed of Pd, La and $Al_2O_3$ was used. These catalysts were maintained at a temperature in the range of 700 - 800 °C. The space velocity of the reaction gas was 1000 $h^{-1}$. The gas treated at the exhaust gas washing tower 13 was introduced into the cyclone type mist separator 21 of 24 mm in inner diameter (the maximum diameter portion) and 111 mm in height under the condition that the entrance velocity was approximately 20 m/s. The cyclone type mist separator having the structure shown in FIG. 2(A) and FIG. 2(B) was used. The inner diameter of the liquid outlet 24 was 14 mm. The impeller portion of the exhaust blower was coated with an epoxy resin as corrosion resistant material.

The mist removal rate was calculated by measuring the $SO_3$ concentration in the gas before and after the cyclone type mist separator. The $SO_3$ concentration was taken as the value which was obtained by subtracting the $SO_3$ concentration measured by gas chromatography from the $SO_3$ concentration measured by a gas collecting method. As the result, the $SO_3$ concentration before the mist separator was 153 ppm, the $SO_3$ concentration after the mist separator was 30 ppm, and it was revealed that the mist removal rate was 80 %. The exhaust blower 16 was left one day after the test and was then disassembled, but no corrosion could be observed.

The method for preparing the catalyst used in the test was as follows:

$Al_2O_3$ catalyst containing Ni:
Commercially available boehmite powder was dried at 120 °C for 1 h. An aqueous solution of nickel nitrate hexahydrate (210.82 g) was added to the dried boehmite powder (200 g) and kneaded. After kneading, the mixture was dried at 200 - 300 °C for approximately 2 h, and calcined at 700 °C for 2 h. After the calcination, the calcined body was pulverized, and sieved to a diameter in the range of 0.5 - 1 mm. The composition of the catalyst after the preparation was Al:Ni = 80:20 (mole %)in atomic ratio, and $NiAl_2O_4$ and NiO were observed by X-ray diffraction analysis of the catalyst. No $Al_2O_3$ peak could be observed clearly.

$Al_2O_3$ catalyst containing Pd, La:
Commercially available $Al_2O_3$ granules of 2 - 4 mm in diameter (made by Sumitomo Chemicals Co., NKHD-24) were crushed to a diameter of 0.5 - 1 mm, and dried at 120 °C for 1 h. An aqueous solution of lanthanum nitrate hexahydrate was impregnated into the dried $Al_2O_3$ granules so that the $La_2O_3$ amount was 10 % by weight. That is, lanthanum nitrate hexahydrate (26.84 g) was dissolved in deionized water; the aqueous solution was impregnated into 100 g of $Al_2O_3$, the mixture was dried at 120 °C for 2 h, and calcined. By the calcination, $Al_2O_3$ containing La was obtained. An aqueous solution of palladium nitrate was impregnated into the La containing $Al_2O_3$ so that the palladium amount was 0.5 % by weight. Practically, an aqueous solution of 11.26 g of palladium nitrate concentration of 4.439 % by weight in deionized water was impregnated into the 100 g of the $Al_2O_3$ containing La. After the impregnation, the impregnated $Al_2O_3$ was dried at 120 °C for 2 h, and calcined.

(Comparative Example)

A similar experiment as embodiment 1 was performed without using the mist separating apparatus in embodiment 1 under the condition that the coating on the blower was removed. As the result, mist was introduced into the blower, and acidic water containing dissolved $SO_3$ remained at the inlet and the outlet of the gas. After finishing the test, the blower was left one day as it was. Corrosion products were generated on the blower, and choking the gas flow path was observed. The corrosion products adhered to the blower tightly, and the blower could not start up.

Embodiment 2

A similar experiment as embodiment 1 was performed using a filter type mist separating apparatus illustrated in FIG. 3 instead of the cyclone type mist separator of embodiment 1. The filter type mist separator was cylindrical, 79 mm in inner diameter and 500 mm in height; a flange was provided at approximately the middle (250 mm in height) of the cylinder, and filters 32, 33 were fixed by the flange. The filter used was a commercially available filter made of glass, and two filters, one of which (filter 32) had fine pores of 100 - 160 $\mu$m in diameter and the other (filter 33) had fine pores of 160 - 250 $\mu$m in diameter, were overlapped. The thickness of the two filters was 10 mm. The gas velocity at the filter portion was 24 cm/s. As the result, the $SO_3$ concentration before the mist separator was 138 ppm, the $SO_3$ concentration after the mist separator was 16 ppm, and it was revealed that the mist removal rate was 88 %. The exhaust blower was left one day after the test and then disassembled; no corrosion could be observed.

Embodiment 3

A similar experiment as embodiment 1 was performed using an electric dust collector illustrated in FIG. 4, instead of the cyclone type mist separator of embodiment 1. The electric dust collector was a cylinder made of vinyl chloride of 45 mm in inner diameter, and a dust collecting electrode made of a stainless steel cylinder of 35 mm in inner diameter and 110 mm in length was placed therein. A discharge electrode made of a tungsten wire of 0.148 mm in diameter was provided at the center of the cylinder. The discharge electrode was supported at the upper and lower portions by discharge electrode supporting rods, made of stainless steel, of 3 mm in diameter. A DC high voltage power supply (10 kV, 100 $\mu$A) was connected to the discharge electrode and the dust collecting electrode.

As the result of performing the $SF_6$ decomposition treatment similarly as in embodiment 1 using 8 kV, the $SO_3$ concentration at the outlet of the washing tower was 140 ppm, and the $SO_3$ concentration at the outlet of the electric dust collector was 42 ppm. Then, it was revealed that the mist removal rate was 70 %. The exhaust blower was left one day after the test and then disassembled; no corrosion could be observed.

Embodiment 4

A similar experiment as embodiment 1 was performed using a two-tower type active carbon absorption apparatus illustrated in FIG. 5 as mist separator.

The absorption/regeneration tower was cylindrical, and its inner diameter was 200 mm, and its height was 1000 mm. The space velocity in the active carbon layer was 450 h$^{-1}$. As the result, the $SO_3$ concentration at the outlet of the washing tower was 148 ppm, the $SO_3$ concentration at the outlet of the absorption apparatus was 33 ppm, and the mist removal rate was 78 %. The exhaust blower was left one day after the test and then disassembled; no corrosion could be observed.

In accordance with the present invention, corrosion of the exhaust pipe or exhaust blower, which are provided downstream of the decomposed gas washing tower, can be suppressed in PFC gas treatment.

**Claims**

1. Method of treating perfluorocompound (PFC) gas comprising perfluorinated compounds, comprising

> (A) decomposing the PFC gas,
> (B) washing the resulting gas with a washing liquid of water or an aqueous alkaline solution,
> (C) removing mist from the washed gas
> and
> (D) discharging the demisted gas and the washing liquid,

> **characterized in that**
> in step (C) mist is removed from the washed gas by means of

>> - a cyclone type apparatus (21),
>> - a filter type mist separator (30) comprising plural filters (32, 33) having different pore sizes,
>> - an electric dust collector (40)
>> or
>> - an active carbon absorportion apparatus (51, 52, 59).

2. Method according to claim 1, **characterized in that** in step (C) a cyclone type apparatus (21) is used comprising a liquid waste outlet (24) at the bottom portion for discharging separated mist liquid and further comprising a liquid outlet (25) for discharging mist liquid contained in the gas flowing through the inner cylinder (26) of the cyclone type apparatus (21).

3. Method according to claim 1, **characterized in that** in step (C) a filter type mist separator (30) is used comprising a liquid outlet (36) for discharging mist liquid.

4. Method according to any of claims 1 to 3,
   **characterized in that**
   in step (A)

(a) the PFC gas is decomposed by hydrolysis, oxidation decomposition, combustion or thermal decomposition with a PFC decomposition catalyst (8),
and
(b) hazardous components are removed from the resulting gas with a hazardous component removing catalyst (9).

5. Method according to any of claims 1 to 4, **characterized in that** in step (A) the PFC gas is diluted with nitrogen and contacted with the PFC decomposition catalyst (8) in the presence of air and water.

6. Method according to claim 4 or 5, **characterized in that** the PFC decomposition catalyst (8) used is composed of $Al_2O_3$ and at least one of Ni, Zn and Ti.

7. Method according to any of claims 4 to 6, **characterized in that** the hazardous component removing catalyst (9) used is composed of $Al_2O_3$ and Pd, La.

8. Apparatus for treating perfluorocompound (PFC) gas comprising perfluorinated compounds,
comprising

   - a PFC decomposition apparatus (1) for decomposing PFC gas,
   - a gas washing apparatus (13) for washing the decomposed gas with a washing liquid of water or an aqueous alkaline solution,
   - mist removal means for removing mist formed in the gas washing apparatus (13),
   and
   - discharging means (16, 19) for discharging demisted gas (17) from the mist removal means and for discharging washing liquid (20),

   **characterized in that**
   the mist removal means (21; 30, 32, 33; 40; 51, 52, 59) are

   - a cyclone type apparatus (21),
   - a filter type mist separator (30) comprising plural filters (32, 33) having different pore sizes,
   - an electric dust collector (40)
   or
   - an active carbon absorption apparatus (51, 52, 59).

9. Apparatus according to claim 8, **characterized in that** the cyclone type apparatus (21) comprises a liquid waste outlet (24) at the bottom portion for discharging separated mist liquid and further comprises a liquid outlet (25) for discharging mist liquid contained in the gas flowing through the inner cylinder (26) of the cyclone type apparatus (21).

10. Apparatus according to claim 8, **characterized in that** the filter type mist separator (30) comprises a liquid outlet (36) for discharging mist liquid.

11. Apparatus accoding to any of claims 8 to 10,
    **characterized in that**
    the PFC decomposition apparatus (1) comprises

    (a) a PFC decomposition catalyst (8) for decomposing the PFC gas by hydrolysis, oxidation decomposition, combustion or thermal decomposition
    and
    (b) a hazardous component removing catalyst (9) for removing hazardous components from the PFC decomposition gas.

12. Apparatus according to any of claims 8 to 11,
    **characterized in that** the PFC decomposition apparatus (1) is a tower comprising

    - a preheater (2) comprising inlet means for introducing the gas to be treated (100), air (3) and water (10, 103), for pre-heating the reaction gas,
    - the PFC decomposition catalyst (8),

- the hazardous component removing catalyst (9)
and
- a heater (6) for heating the reaction gas, the PFC decomposition catalyst (8) and the hazardous component removing catalyst (9).

13. Apparatus according to claim 11 or 12, **characterized in that** the PFC decomposition catalyst (8) is composed of $Al_2O_3$ and at least one of Ni, Zn and Ti.

14. Apparatus according to any of claims 11 to 13, **characterized in that** the hazardous component removing catalyst (9) is composed of $Al_2O_3$ and Pd, La.

15. Apparatus according to any of claims 8 to 14, **characterized in that** the gas washing apparatus (13) is a gas washing tower wherein water and/or an aqueous alkaline solution is sprayed on the gas.

FIG. 1

# FIG. 2(A)

# FIG. 2(B)

TO BLOWER 16

FROM EXHAUST GAS
WASHING TOWER 13

# FIG. 3

FROM EXHAUST GAS
WASHING TOWER 13

# FIG. 4

FROM EXHAUST
GAS WASHING
TOWER 13

EP 1 775 012 A2

# FIG. 5

WATER 10 ————

TO BLOWER 16

57

58

FROM EXHAUST GAS
WASHING TOWER 13 →

53

56

59

51

52

55

54

55

54

TO WASTE WATER TANK 18 ←

EP 1 775 012 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11070322 A
- JP 11216455 A
- JP 8318122 A
- JP 57197023 A
- US 5955037 A